(19) Europäisches Patentamt
European Patent Office
Office européen des brevets

(11) **EP 4 537 711 B1**

(12) **EUROPEAN PATENT SPECIFICATION**

(45) Date of publication and mention
of the grant of the patent:
**10.06.2026 Bulletin 2026/24**

(21) Application number: **24205446.8**

(22) Date of filing: **09.10.2024**

(51) International Patent Classification (IPC):
*A47F 3/00* *(2006.01)*        *A47F 3/04* *(2006.01)*
*A47F 3/12* *(2006.01)*        *F16B 12/04* *(2006.01)*

(52) Cooperative Patent Classification (CPC):
**A47F 3/007; A47F 3/0434; A47F 3/12; F16B 12/04;**
F25D 21/04; F25D 2400/10

(54) **JOINING MEANS FOR GLASS SHEETS HARDENED**

VERBINDUNGSMITTEL FÜR GEHÄRTETE GLASSCHEIBEN

MOYEN D'ASSEMBLAGE POUR FEUILLES DE VERRE DURCIES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **10.10.2023 IT 202300021066**

(43) Date of publication of application:
**16.04.2025 Bulletin 2025/16**

(73) Proprietor: **Galilei Refrigerazione S.r.l.
35020 Due Carrare (PD) (IT)**

(72) Inventor: **Favaro, Alfredo
35020 Due Carrare (PD) (IT)**

(74) Representative: **Leganza, Alessandro
Via Sottopasso, 14
36040 Torri di Quartesolo (VI) (IT)**

(56) References cited:
**EP-A2- 2 666 391      JP-U- S54 125 861**

## Description

## TECHNICAL FIELD

The invention is related to means for joining glass sheets, monolithic or double glazing, particularly for application in the manufacturing of refrigerated counters.

## BACKGROUND ART

The invention concerns a new joint for joining tempered glass walls, both in the form of monolithic sheets and double glazing, particularly for use in the manufacturing of refrigerated counters intended for the conservation and presentation of food products. The documents EP 2 666 391 A2 and JP S54 125861 U disclose means for joining glass sheets.

Refrigerated counters or refrigerator cabinet have different geometries and conformations depending on the type of food product to be preserved and displayed and based on the needs of the customer, typically a Retail Purchasing Consortium.

In any case, the refrigerated counter is similar to a piece of furniture made of insulating materials, equipped with a cooling system and characterized by large transparent walls in accordance with its intended use. In fact, the refrigerated counter must enhance the food products stored inside and not only store them in adequate temperature conditions. Consequently, it is essential to adopt technical measures aimed at obtaining maximum transparency of the refrigerated counter.

This remarkable feature is defined by the parameter TDA ("Total Display Area"), which in summary indicates the total visible area of the displayed products, including the visible area through the wall, and can be defined by the sum of the horizontal and vertical projected surfaces of the net volume of the refrigerated counter expressed in square meters.

The evaluation of the TDA is important for the purposes of attributing the Energy Class of the refrigerated counter, so much so that it is regulated by the EN ISO 23953-2:2015 standard *"Refrigerated display cabinets - Part 2: Classification, requirements and test conditions"*.

In detail, the Energy Class depends on the value of the Energy Efficiency Index (EEI) defined by the formula $EEI = AE/SAE \times 100$ in which SAE is the Standard Annual Energy consumption and AE the Annual Energy Consumption given by the following formulas:

$$AE = 365 \times E_{day}$$

$$SAE = 365 \times P \times (M + N \times Y) \times C$$

For example, Energy Class A includes those refrigerated cabinets characterized by an EEI value between 0 and 10, while Energy Class B includes those with EEI between 10 and 20.

In turn, AE and SAE depend on parameters defined by EU regulation 2019/2024 of 01/10/2019: $E_{day}$ indicates the daily consumption of the refrigerated counter; P, C, M and N are parameters related to the type of use, the shape of the refrigerator cabinet and the storage temperature class; Y is the sum of the TDA of all the compartments of the same temperature class of the refrigerated counter (expressed in square meters and rounded to two decimal places).

In summary, upon application of these formulas it emerges that an increase in the TDA, for the same refrigerated counter, allows an energy class to be gained (compared to that in the absence of an increase in the TDA), or allows the energy consumption of the refrigerated counter to be increased without worsening of the energy class (it is worth mentioning that an increase in energy consumption may be desirable to improve the storage temperature of the product, or to use any anti-fog heaters to improve the visibility of the product).

It should be noted that once installed, for example in a hypermarket, the refrigerated counter is usually moved in the store, even frequently, e.g. to reorganize the layout of the point of sale according to the seasons, promotional sales, or following renovation operations.

Clearly, continuous displacements of the counter may lead to breakage of the most fragile components i.e. the glass walls.

At the state of the art, there are known refrigerated counters including the side walls and the front wall made of transparent plexiglass (polymethylmethacrylate or PMMA) having an high thickness, for example 20 mm.

Plexiglass is a material that has advantages in terms of ease of processing. For example, it can be easily drilled without using any particular precautions. This feature allows to easily form the joints between the side walls and the front wall of the refrigerated counter.

Despite its widespread diffusion, plexiglass is not the optimal material in terms of energy performance.

Since energy saving represents an issue that has become increasingly important in recent years, manufacturers have dedicated efforts to replace plexiglass with transparent materials capable of ensuring better thermal insulation.

In recent years, the material on which the attention of manufacturers has focused is glass in the form of double glazing (monolithic glass is rarely used as it has poor energy performance, worse than plexiglass itself).

It is well known that double glazing is an insulating glass unit made up of two or more layers of glass separated by one or more interspaces of dehydrated air or gas, and a double-sealed perimeter metal frame which includes spacer profiles to keep the layers parallel one to each other.

For safety reasons, the glass sheets used to manufacture a refrigerated counter are tempered.

Contrary to plexiglas, the use of tempered glass (in monolithic layers or double glazing) prevents the joints between the side walls and the front wall to be easily formed.

In fact, once the glass has been tempered it cannot undergo any other mechanical processing.

It is in fact well-known that tempering, obtained through a thermal or chemical process, modifies the original elastic state of the glass, by increasing its mechanical resistance but preventing its transformation: any attempt to drill or cut the glass would lead to an immediate shattering of the glass sheet.

Theoretically it is possible to first make the sheet to size, drill holes and then perform the tempering process. However, tensions concentrate around the holes and can lead to breakage of the sheet. The intensity of the tension depends on the shape (symmetrical or non-symmetrical) of the sheet but it always increases as the hole gets closer to the edges or corners of the sheet. For this reason, the thickness of the sheet around the edges must be increased to avoid breakages (typically 4 to 6 times at the corners, 2 to 3 times at the edges). This solution as well is not acceptable from both the perspective of design and cost.

For these reasons, the exact positioning of the holes in tempered glass and the thickness of the sheet around the edges are very important factors to guarantee the safety of the product. Clearly they limit the application of tempered glass to refrigerated counters.

In summary, the use of tempered glass, in monolithic sheets or double glazing, in the manufacturing of refrigerated counters faces intrinsic limitations.

The attempts to circumvent these limitations only lead to unsatisfactory technical solutions.

For example, there are known refrigerated counters in which a 90° joint between the side walls and the front wall is formed by gluing two double glazing units to a suitably shaped steel or aluminum upright, which is part of the load-bearing structure of the refrigerated counter.

The main drawback of this known solution is the fact that in the event of breakage the repair must necessarily be carried out by the manufacturer as it involves the disassembling and replacement of substantial parts of the refrigerated counter and not just the damaged wall. This issue has a clear impact on repair times and counter management costs.

A variant of this known solution involves inserting the sheets of tempered glass into a L-shaped groove obtained on a suitably profiled steel or aluminum upright, which as in the previous case, is part of the load-bearing structure of the refrigerated counter. In this case also, sheet breakage leads to time-consuming, costly and complex repairing operation.

Furthermore, regardless of the issues related to repairing, metal uprights used in both of these known solutions generate thermal bridges, so great that electrical resistors are normally placed in these parts of the refrigerated counter to avoid condensation and hence to comply with the stringent technical regulations in the field. Clearly the energy impact of the resistors (quantifiable as approximately 150 Watts per counter) is completely unfavorable.

To conclude the assessment of the state of the art, it is worth noting that joints for tempered glass sheets for use in furniture items are known. However, these products are not able to satisfy the stringent technical and regulatory needs of refrigerated counters.

Following a careful search, currently the technical problem of joining tempered glass in the manufacturing of refrigerated cabinets does not appear to be adequately addressed and the present inventor is not aware of any solutions useful to overcome the problems highlighted above.

Therefore, there is still a need to improve joining means for use in the manufacturing of tempered glass walls (both in the form of monolithic sheets and double glazing) for refrigerated counters intended for the conservation and presentation of food products.

## DISCLOSURE OF INVENTION

### Object of the invention

The present invention intends to overcome the limitations and drawbacks of the solutions known in the state of the art as set forth above, by providing an improved joining means for tempered glass walls in the form of monolithic sheets and double glazing.

In particular, the main object of the present invention is to disclose a small joining means for tempered glass walls which is capable, on the one hand, of ensuring maximum transparency to enhance the products displayed in the refrigerated counter and, on the other, of avoiding a visual disturbance on the observer.

A second object of the present invention is to provide a joining means which is designed to avoid breakages, in particular when applied to the edges of a monolithic sheet of tempered glass or of a double glazing unit made with monolithic sheets of tempered glass.

A further object of the present invention is to provide a joining means designed to facilitate the replacement of the sheet or double glazing in the event of breakage. This purpose includes the possibility for a specialized maintenance technician to replace the damaged sheet quickly, and with a light intervention (i.e. without dismantling substantial parts of the refrigerated counter) directly where the refrigerated counter is located, thus avoiding the transport of the counter at the manufacturer's factory.

A fourth object of the present invention is to provide a joining means that contributes to reducing the energy consumption of the refrigerated cabinet for the same Total Display Area. In particular, this task includes making a joining means that minimizes thermal bridges and does not require the use of electrical resistors to avoid condensation.

A fifth object of the present invention is to provide a joining means having a simple structure and which can be made using known technologies and at low costs to facilitate its adoption on a large scale.

Finally, a final object of the present invention is to provide construction elements including two or more of said joint means as well as a refrigerated counter in which the transparent surfaces are made of tempered glass (in the form of double glazing or a monolithic sheet) and are linked using the joining means according to the invention.

*Technical solution*

These and still other objects, which will appear more clearly hereinafter, are achieved by a joining means, a construction element for a refrigerated counter comprising two or more of said joining means, as well as by a refrigerated counter in which the transparent sheets of tempered glass are joined by means of a plurality of said joining means.

The invention is defined by the appended independent claims 1, 8 and 9 while advantageous features are set forth in the appended dependent claims. The aforesaid claims, to which reference should be made for the sake of brevity, are hereinafter specifically defined and are intended as an integral part of the present description.

*Brief description of drawings*

The features and advantages of the present invention will be more fully understood by reference to the following drawings which are provided solely for illustration of the embodiments and not limitation thereof:

- Figure 1 shows the joining means according to the invention which joins at 90° two walls of a refrigerated counter made up of two double glazing. Under (a), a general top view is shown while under (b) a detailed view of the components is shown;

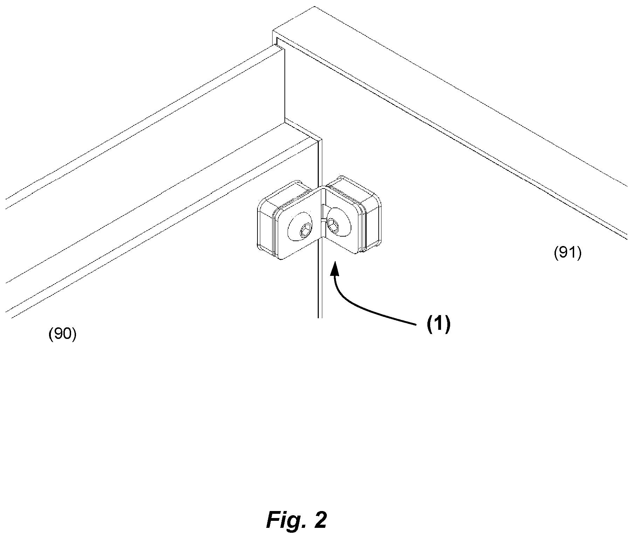

- Figure 2 is a perspective view of the joining means of Figure 1;
- Figure 3 shows the joining means according to the third embodiment of the invention in which the angular support element is formed by two arms joined at 135° by a segment to join two double glazing placed at 90° to each other. A top view and a perspective view are shown under (a) and (b) respectively;
- Figure 4 illustrates a refrigerated counter in which the transparent surfaces are made of tempered glass, in the form of double glazing or monolithic layers, and are joined using a plurality of joining means according to the invention;

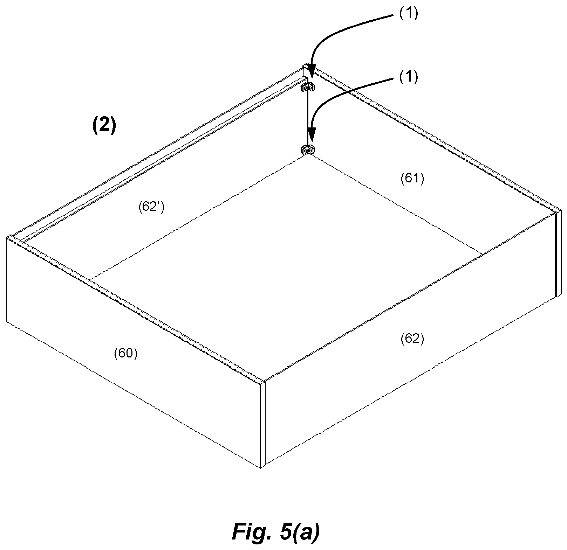

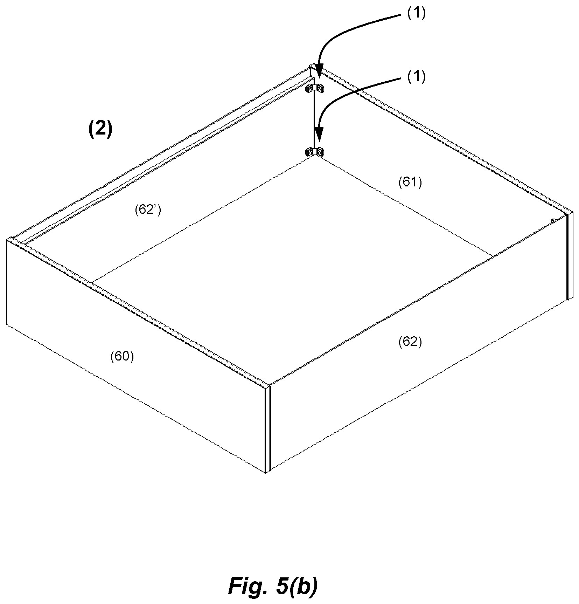

- Figure 5 shows in a perspective view a detail of the refrigerated counter of Figure 4, in particular a construction element obtained by joining a plurality of joining means according to the invention to glass walls is shown. Letter (a) refers to the first embodiment of the invention while letter (b) refers to the third embodiment.

These figures illustrate and demonstrate various features and embodiments of the present invention but are not to be construed as limiting the invention.

## DETAILED DESCRIPTION OF THE INVENTION

The inventive concept underlying the present invention is related to a small-sized joint based on a material with variable elasticity capable of firmly joining sheets of tempered glass and at the same time absorbing the elastic tensions generated both during the assembly and change of position of the refrigerated counter e.g. in the event the layout of the store is modified.

The reduction to practice of the inventive concept is provided by the following four preferred, but not exclusive embodiments, the detailed explanation of which is reported below.

*First preferred embodiment*

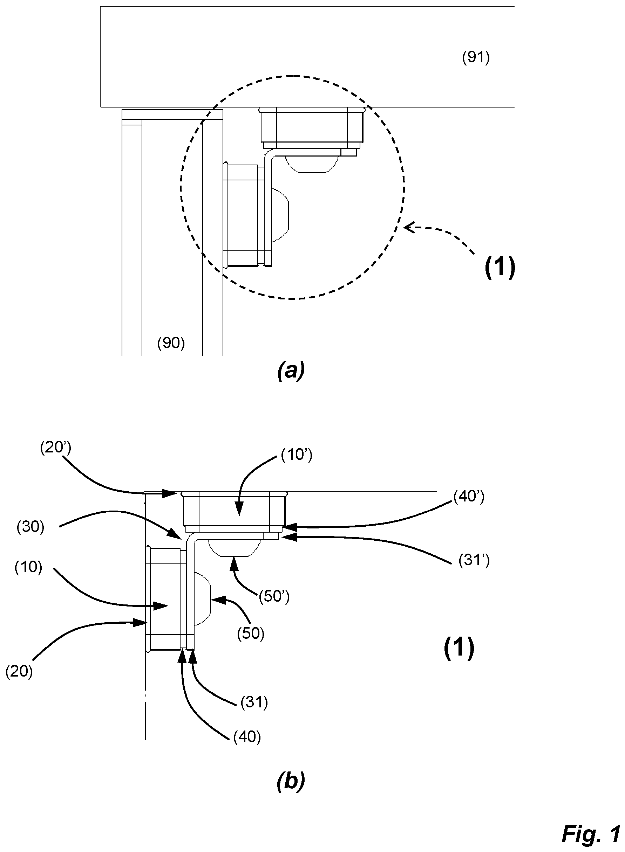

In the first preferred embodiment, herein described by way of example and not limitation with reference to the enclosed Figure 1, the joining means according to the invention is indicated with the reference (1) and is made up of: a pair of metal plates (10,10'), each of which having a hole with threaded walls thereon; a pair of first elastic and/or adhesive members (20,20') each being placed between a metal plate (10,10') and a glass plate; a metal angular support member (30) having two arms (31,31') with two slotted holes thereon, one for each arm; a pair of second elastic and/or adhesive members (40,40') each being placed between the metal plate (10,10') and the angular support member (30); fixing screws (50) selected to allow insertion of the angular support member (30) into the slotted holes and into the threaded holes of the two metal plates (10,10').

In this embodiment, the angular support member (30) has two identical flat-shaped arms (31,31') placed at 90° to each other. Preferably, the arms (31,31') have a length between 20 and 40 mm depending on the geometry of the refrigerated counter. With reference to the enclosed Figure1, the width of the arms (31.31') is between 10 and 20 mm. The arms (31.31') can be easily made by blanking using a common sheet metal of low thickness, preferably between about 1.0 and 1.5 mm in order to ensure an adequate flexibility to the angular support member. This choice advantageously enables to compensate tensions due to the manufacturing tolerances (e.g. the angle formed by the arms may not be exactly 90°) and prevent them from being discharged onto the tempered glass, leading to the initiation of a crack. Each arm (31.31') has a slotted hole to further facilitate the assembly of the joining means (1) on a first sheet and facilitate the connection with the second sheet.

An angular support member (30) with these features is suitable for joining together two tempered glasses having a flat shape, in the form of a monolithic layer or a double glazing.

Particularly, the joining means (1) according to the preferred embodiment, which is described here by way of explanation and not limitation of the present invention, is used to join a first double-glazing unit (90) to a second double-glazing unit (91).

In the preferred embodiment, the joining means (1) includes a pair of identical metal plates (10,10'), having the shape of a parallelepiped with a square base and a threaded blind hole in the center.

To join the two tempered glasses, a common fixing screw (50), e.g. a M4 type screw of suitable length, is screwed in the hole.

Preferably the plates (10,10') are made of stainless steel to prevent corrosion that is unacceptable as it raises both hygienic and product reputation concerns. However, different materials, metallic and non-metallic, can be used provided they allow the creation of a stable thread and have an adequate elastic modulus comparable to that of stainless steel. For example, techno-polymers such as acetal resins, e.g. POM (polyoxymethylene) enhanced with glass fiber can be equivalently used. The base of the plates (10) has a height between 2 and 6 mm and a side length between approximately 10 and 20 mm identical to the width of the arms (31.31') of the angular support member (30). However, for the purposes of implementing the present invention different dimensions can be chosen provided that the plate has an elastic modulus between 100 GPa and 200 GPa.

In the preferred embodiment, the plates (10,10') are glued to the sheets of the double glazing (90,91) by means of first members of adhesive material (20,20') which form substantially parallelepiped-shaped layers having a base of similar dimensions to those of the plate (10,10') and a thickness between 0.8 and 2.0 mm.

In this embodiment, each of said first members (20,20') is made using a flexible bicomponent structural adhesive, preferably acrylic-based. However, other structural adhesives of a known type can be equivalently used.

In the preferred embodiment, the joining means (1) includes a pair of second adhesive and/or elastic members (40,40'), each being placed between a plate of said pair (10,10') and an arm (31,31') of the support member (30).

Preferably, the second members (40,40') has the same shape as the first members (20,20') (20,20') and consist of a bearing made of rubber, or other equivalent material, having a shore between 40 and 80. Furthermore, it has a base with dimensions substantially identical to those of: the metal plate (10,10'), the first member (20,20') and the width of the arms (31,31') of the angular member (30). The thickness of the second member (40,40') is between about 0.8 and 2.0 mm.

Different choices are however possible according to the thickness of the sheets to be joined, and hence the tensions to be absorbed but also the design of the refrigerated counter. In particular, the first members (20,20') and the second members (40,40') can be different, for example cylindrical in shape. Furthermore, the first members (20,20'), as well as the second members (40,40') can be different from each other, for example one (20) cylindrical in shape and the other (20') shaped like a parallelepiped.

However, it is necessary that the first member (20)/(20') and the second member (40)/(40') have a substantially equal hardness or shore degree for the purposes of implementing the present invention. In this embodiment, the shore measured according to industry standards is preferably between 40 and 80.

Using the materials and relative thicknesses indicated above, the components (10,10',20,20',30,40,40') behave collectively as a material which is rigid enough to firmly block the first double glazing (90) against the second double glazing (91), and sufficiently elastic to allow absorption of the stresses due to tolerances related to components manufacturing and to the assembly of the refrigerated counter.

Experimental tests have shown that double glazing jointed using the joining means (1) according to the first preferred embodiment do not break even under stress conditions due to e.g., movement of the refrigerated counter in the shop or loading and unloading operations related to transport.

Conversely, if the same double glazing units are joined using traditional non-elastic joints, they are generally subject to spontaneous and sudden rupture as the present inventor has verified.

From the description provided, it is clear that the joining means described above has very small dimensions making it almost invisible once applied to the walls of a refrigerated counter.

Furthermore, it will be apparent to those skilled in the art that the components of the joining means (1) can be different in shape with respect to the one described above. For example, to join two curved double glazing units, the arms (31,31') of the angular support member (30) can have a flat or a rounded shape with a curvature matching that of the glass to be joined.

Thanks to the configuration of the joining means (1) according to the present embodiment, the procedure for joining two tempered glass elements, such as two double glazing units (90,91), is very simple and is disclosed in the following.

By taking into account the length of the arm (31) of the angular support member (30), the metal plate (10) is fixed near an edge of the first double glazing (90), applying a first elastic and/or adhesive member (20).

Then the second elastic and/or adhesive element (40) is applied to the upper surface of the metal plate (10). For this purpose, the surface of the second element (40) in contact with the metal plate (10) can be coated with an adhesive component to facilitate the alignment and assembly of the plates (90,91).

Finally, the threaded hole of the metal plate (10) and the slotted hole of the arm (31) are aligned and the fixing screw (50) is tightened not too firmly in order to fasten the joining means to the first double glazing (90) and at the same time provide proper clearance.

Similarly, components (10',20',30',40') are applied to the second double glazing (91) to be joined. Once the joining means (1) has been fastened to the two elements (90,91) it is possible to fully tighten the two screws. If the angular support member (30) does not have its arms (31,31') perfectly at 90° one to each other, the tensions induced by tightening the screws (50) will be discharged on the angular support member (30) provided that it is made of a metal sheet having a low thickness, around 1.0 - 1.5 mm, and a suitable elastic modulus.

From the disclosure provided above, It will be clear to those skilled in the art that the individual operations to join the two double glazing units (90,91) are not necessarily sequential.

For example, the metal plates (10,10') and the first elastic and/or adhesive members (20,20') can be applied directly during the manufacturing step of the double glazing (90,91) while the joining operation can be accomplished during the assembly step of the refrigerated counter.

With a similar procedure, it is possible to separate the two glass elements of the refrigerated counter if one of them breaks and needs to be replaced.

To conclude, it will be clear to the skilled in the art that the dismantling operation does not require special tools nor is it particularly complex and therefore can be carried out by a technician directly at the customer's site where the refrigerated counter is installed.

*Second preferred embodiment*

The second preferred embodiment, herein provided by way of explanation and not limitation of the present invention, refers to a joining means in which the angular support member (30) is replaced by a planar member, while the other components of the joint are the same as in the previous embodiment. A joining means with this geometry is very useful for joining flat transparent elements at 180° as in the case of a refrigerated counter having a large front wall which is complicated, or too expensive, to produce as a single piece.

Further technical details for implementing this embodiment can be obtained from the previous one or from common knowledge known to those skilled in the art.

*Third preferred embodiment*

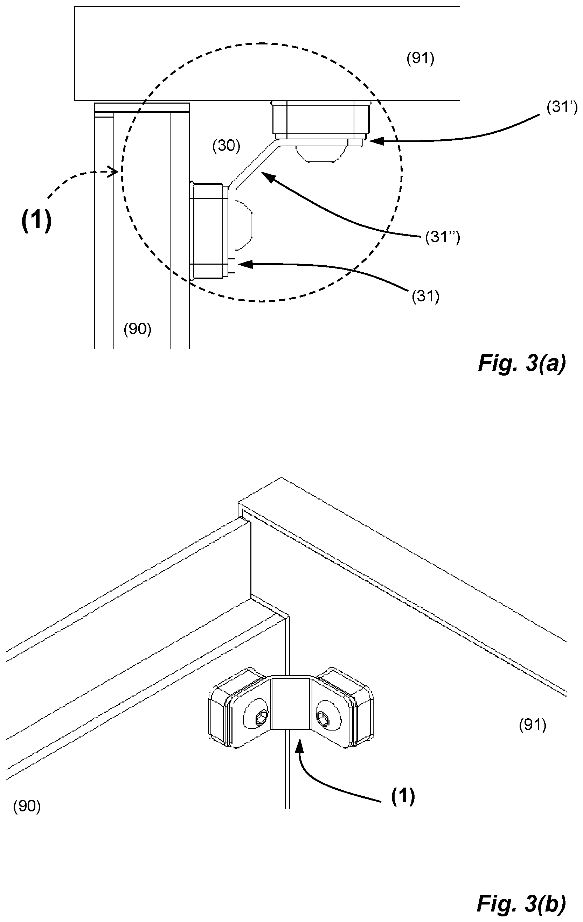

In the third preferred embodiment, herein provided by way of explanation and not limitation of the present invention, the joining means (3) includes a polygonal member which replaces the angular support member (30) of the first embodiment having the two arms at right angle. With reference to the enclosed Figure 3, for the sake of simplicity the polygonal member (30) shall be indicated with the same reference number as the angular support member (30). Said polygonal member (30) consists of two arms (31,31') joined at 135° by a segment (31") so that said arms (31,31') are arranged at an angle of 90° one to the other.

It will be apparent to those skilled in the art that this configuration advantageously greatly increases the elasticity of the joint.

Other technical details for implementing this embodiment can be obtained from the first or from common knowledge well-known to those skilled in the art.

*Fourth preferred embodiment*

A further object of the present invention is a refrigerated counter comprising one or more construction elements (2) in which the transparent surfaces are made of tempered glass, in the form of double glazing or monolithic layer, and are joined by means of a plurality of joining means according to one of the previous embodiments.

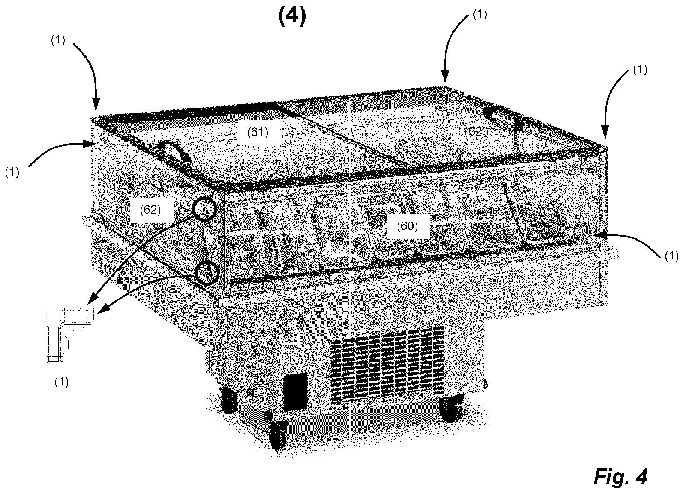

With reference to the enclosed Figure 4, the refrigerated counter according to the present non-limiting embodiment is an island refrigerated counter (4) and includes a front wall (60), a rear wall (61) and two side walls (62,62'). The walls (60,61,62,62') consist of flat sheets in the form of double glazing joined together at the corners by eight joining means (1) configured as in the first or third embodiment.

In this way it is possible to increase the transparent surface by 5-7% compared to a similar counter having the same display surface where, however, the front and rear walls (60,61) and the two side walls (62,62') are joined with known systems, e.g. by inserting them onto suitably profiled steel uprights. Although this achievement may be considered negligible, it has indeed a high visual impact to the extent that the observer has the perception that no joining means between the transparent walls are present at all.

Based on the formulas cited above, the increase in TDA is associated with an energy reduction (to be quantified in the future through tests at independent laboratories) which allows more energy to be used while remaining in the same class (class B in the case of the island refrigerated counter of Figure 4). Therefore, the refrigerated counter according to the fourth embodiment of the invention is characterized by an overall qualitatively superior performance in terms of goods conservation and visibility compared to a counter having the same geometry and transparent walls joined with traditional joining means.

**CONCLUSIONS**

To conclude, it has been found that the invention described hereinabove fully achieves the intended aim and objects. In particular, it will be evident to those skilled in the art that the improved joining means herein disclosed is novel and was obtained through a non-trivial inventive effort.

The invention is not limited to the exemplary embodiments shown and described herein and although the description and examples provided contain many details, these should not be construed as limiting the scope of the invention but simply as illustrations of some embodiments of the present invention.

For example, those skilled in the art may modify the first preferred embodiment in an obvious way to obtain a joining means having an angular member with arms forming an angle other than 90°, or even an angular member with curved arms. These alternatives are useful to join transparent elements other than the front and side walls or may be used to join transparent elements having a non-flat geometry, e.g. curved tempered glass sheets. In this way it is possible to create refrigerated counters with unconventional geometry and conformation.

Furthermore, even if energy performance makes double glazing tempered glass the preferable option for refrigerated counters, it is clear that the joining means according to the invention can also be used to join monolithic tempered glass sheets.

Hence, any modification of the present invention which falls within the scope of the following claims is considered to be part of the present invention.

Where the characteristics and techniques mentioned in any claim are followed by reference signs, these reference marks have been applied solely for the purpose of increasing the intelligibility of the claims and consequently these reference marks have no limiting effect on the interpretation of each element identified by way of example from these reference signs.

**Claims**

1. Joining means (1) for tempered glass elements including:

   - a pair of plates (10,10'), preferably made of metal, having a hole with threaded walls thereon;
   - a pair of first adhesive and/or elastic members (20,20') each to be placed between a glass plate and a plate of said pair (10,10');
   - a support member (30), preferably made of metal, having at least two arms (31,31') with two slotted holes thereon, one for each arm;
   - a pair of second adhesive and/or elastic members (40,40') each being placed between a plate of said pair (10,10') and an arm (31,31') of the support member (30);
   - fixing screws (50) selected to allow insertion into the slotted hole of the support member (30) and into the threaded hole of the plate of said pair (10,10').

2. Joining means (1) according to claim 1 wherein said support member (30) is:

   - an angular member (30) with arms (31,31') arranged at an angle of 90°; or
   - a planar member (30) with arms (31,31') arranged at an angle of 180°; or
   - an angular member (30) with arms (31,31') arranged at an angle other than 90° or 180°; or
   - a polygonal member (30) consisting of two arms (31,31') joined at 135° by a segment (31") so that said arms (31,31') are arranged at an angle of 90°,

   said arms (31,31') having a flat or curved shape.

3. Joining means (1) according to claim 1 or 2 wherein the arms (31,31'), or the two plates (10,10'), or the two first adhesive and/or elastic members (20,20'), or the two second adhesive and/or elastic members (40,40') are equal to each other.

4. Joining means (1) according to one or more of the preceding claims wherein the pair of first members (20,20') is equal to the pair of second members (40,40').

5. Joining means (1) according to one or more of the preceding claims wherein the first members (20,20') and the corresponding second members (40,40') have an equal shore which is in the range between 30 and 80.

6. Joining means (1) according to one or more of the preceding claims wherein said plates (10,10') are made of: steel, stainless steel, techno-polymers such as POM loaded with glass fibers, or a combination thereof.

7. Joining means (1) according to one or more of the preceding claims wherein said tempered glass elements take the form of a double glazing or a monolithic glass sheet, or a combination thereof.

8. Construction element (2), particularly for a refrigerated counter, comprising transparent or opaque surfaces made of tempered glass joined by a plurality of joining means (1) according to one or more of the preceding claims, wherein said tempered glass elements take the form of double glazing or a monolithic glass sheet, or a combination thereof.

9. Refrigerated counter (4) **characterized by the fact** of having transparent or opaque walls joined by one or more joining means according to one or more of claims 1 to 7.

10. Refrigerated counter (4) according to claim 9 wherein said transparent or opaque walls, after the installation of the refrigerated counter, can be replaced directly at the installation site and without substantial disassembling the counter.

11. Refrigerated counter (4) according to claim 9 or 10 **characterized by the fact** of having an increase in Total Display Area (TDA) approximately 5% higher than a similar refrigerated counter having the same display surface but not the joining means according to one or more of claims 1 to 7.

12. Refrigerated counter (4) according to claim 11 said said increase in TDA enables to:

- gain at least one energy class compared to the class of a similar refrigerated counter having the same display surface but not the joining means according to one or more of claims 1 to 7; or
- increase energy consumption without worsening the energy class compared to a similar refrigerated counter having the same display surface but not the joining means according to one or more of claims 1 to 7.

**Patentansprüche**

1. Verbindungsmittel (1) für Elemente aus gehärtetem Glas, umfassend:

- ein Paar Platten (10, 10'), vorzugsweise aus Metall, die jeweils eine Gewindebohrung darauf aufweisen;
- ein Paar erster klebender und/oder elastischer Elemente (20, 20'), die jeweils zwischen einer Glasplatte und einer Platte des genannten Paares (10, 10') anzuordnen sind;
- ein Stützelement (30), vorzugsweise aus Metall, das mindestens zwei Arme (31, 31') mit zwei Langlöchern darauf aufweist, eines pro Arm;
- ein Paar zweiter klebender und/oder elastischer Elemente (40, 40'), die jeweils zwischen einer Platte des Paares (10, 10') und einem Arm (31, 31') des Stützelements (30) angeordnet sind;
- Befestigungsschrauben (50), die ausgewählt sind, um das Einführen in das Langloch des Stützelements (30) und in die Gewindebohrung der Platte des Paares (10, 10') zu ermöglichen.

2. Verbindungsmittel (1) nach Anspruch 1, wobei das Stützelement (30) Folgendes ist:

- ein Winkelelement (30) mit Armen (31, 31'), die in einem Winkel von 90° angeordnet sind; oder
- ein flaches Element (30) mit Armen (31, 31'), die in einem Winkel von 180° angeordnet sind; oder
- ein Winkelelement (30) mit Armen (31, 31'), die in einem anderen Winkel als 90° oder 180° angeordnet sind; oder
- ein polygonales Element (30), bestehend aus zwei Armen (31, 31'), die in einem Winkel von 135° durch ein Segment (31',) verbunden sind, sodass die Arme (31, 31') in einem Winkel von 90° angeordnet sind,

wobei die Arme (31, 31') eine flache oder gekrümmte Form aufweisen.

3. Verbindungsmittel (1) nach Anspruch 1 oder 2, wobei die Arme (31, 31') oder die zwei Platten (10, 10') oder die zwei ersten klebenden und/oder elastischen Elemente (20, 20') oder die zwei zweiten klebenden und/oder elastischen Elemente (40, 40') einander entsprechen.

4. Verbindungsmittel (1) nach einem oder mehreren der vorstehenden Ansprüche, wobei das Paar erster Elemente (20, 20') dem Paar zweiter Elemente (40, 40') entspricht.

5. Verbindungsmittel (1) nach einem oder mehreren der vorstehenden Ansprüche, wobei die ersten Elemente (20, 20') und die entsprechenden zweiten Elemente (40, 40') eine Shore-Härte aufweisen, die gleich ist und in dem Bereich zwischen 30 und 80 liegt.

6. Verbindungsmittel (1) nach einem oder mehreren der vorstehenden Ansprüche, wobei die Platten (10, 10') hergestellt sind aus: Stahl, Edelstahl, Technopolymeren wie glasfaserverstärktem POM oder einer Kombination davon.

7. Verbindungsmittel (1) nach einem oder mehreren der vorstehenden Ansprüche, wobei die Elemente aus gehärtetem Glas die Form einer Doppelverglasung oder einer monolithischen Glasscheibe oder einer Kombination davon aufweisen.

8. Bauelement (2), insbesondere für eine Kühltheke, umfassend transparente oder opake Oberflächen aus gehärtetem Glas, die durch eine Vielzahl von Verbindungsmitteln (1) nach einem oder mehreren der vorstehenden Ansprüche verbunden sind, wobei die Elemente aus gehärtetem Glas die Form einer Doppelverglasung oder einer monolithischen Glasscheibe oder einer Kombination davon aufweisen.

9. Kühltheke (4), **dadurch gekennzeichnet, dass** sie transparente oder opake Wände aufweist, die durch ein oder mehrere Verbindungsmittel nach einem oder mehreren der Ansprüche 1 bis 7 verbunden sind.

**10.** Kühltheke (4) nach Anspruch 9, wobei die transparenten oder opaken Wände nach der Installation der Kühltheke direkt an dem Installationsort und ohne wesentliche Demontage der Theke ausgetauscht werden können.

**11.** Kühltheke (4) nach Anspruch 9 oder 10, **dadurch gekennzeichnet, dass** sie eine um etwa 5 % erhöhte Gesamtpräsentationsfläche (TDA) gegenüber einer vergleichbaren Kühltheke mit derselben Präsentationsfläche, jedoch ohne die Verbindungsmittel nach einem oder mehreren der Ansprüche 1 bis 7, aufweist.

**12.** Kühltheke (4) nach Anspruch 11, wobei die Erhöhung der TDA Folgendes ermöglicht:

- Gewinnen von mindestens einer Energieklasse im Vergleich zu der Klasse einer ähnlichen Kühltheke mit derselben Präsentationsfläche, jedoch ohne die Verbindungsmittel nach einem oder mehreren der Ansprüche 1 bis 7; oder
- Erhöhen des Energieverbrauchs, ohne die Energieklasse im Vergleich zu einer ähnlichen Kühltheke mit derselben Präsentationsfläche, jedoch ohne die Verbindungsmittel nach einem oder mehreren der Ansprüche 1 bis 7, zu verschlechtern.

**Revendications**

**1.** Moyen d'assemblage (1) pour éléments en verre trempé comprenant :

- une paire (10,10') de plaques, de préférence constituées de métal, comportant un trou avec des parois filetées sur celles-ci ;
- une paire de premiers organes (20, 20') adhésifs et/ou élastiques chacun à placer entre une plaque de verre et une plaque de ladite paire (10, 10') ;
- un organe de support (30), de préférence constitué de métal, comportant au moins deux bras (31, 31') avec deux trous fendus sur ceux-ci, un pour chaque bras ;
- une paire de seconds organes (40, 40') adhésifs et/ou élastiques, chacun étant placé entre une plaque de ladite paire (10, 10') et un bras (31, 31') de l'organe de support (30) ;
- des vis de fixation (50) sélectionnées pour permettre l'insertion dans le trou fendu de l'organe de support (30) et dans le trou fileté de la plaque de ladite paire (10, 10').

**2.** Moyen d'assemblage (1) selon la revendication 1, dans lequel ledit organe de support (30) est :

- un organe angulaire (30) avec des bras (31, 31') agencés à un angle de 90 ; ou
- un organe plan (30) avec des bras (31,31') agencés à un angle de 180 ; ou
- un organe angulaire (30) avec des bras (31, 31') agencés à un angle autre que 90° ou 180° ; ou
- un organe polygonal (30) constitué de deux bras (31,31') assemblés à 135° par un segment (31") de sorte que lesdits bras (31,31') soient agencés à un angle de 90°,

lesdits bras (31, 31') présentant une forme plate ou incurvée.

**3.** Moyen d'assemblage (1) selon la revendication 1 ou 2, dans lequel les bras (31, 31'), ou les deux plaques (10, 10'), ou les deux premiers organes (20, 20') adhésifs et/ou élastiques, ou les deux seconds organes (40, 40') adhésifs et/ou élastiques sont égaux les uns par rapport aux autres.

**4.** Moyen d'assemblage (1) selon l'une ou plusieurs des revendications précédentes, dans lequel la paire de premiers organes (20, 20') est égale à la paire de seconds organes (40, 40').

**5.** Moyen d'assemblage (1) selon une ou plusieurs des revendications précédentes, dans lequel les premiers organes (20, 20') et les seconds organes (40, 40') correspondants présentent une dureté Shore égale et comprise entre 30 et 80.

**6.** Moyen d'assemblage (1) selon une ou plusieurs des revendications précédentes, dans lequel lesdites plaques (10, 10') sont constituées de : acier, acier inoxydable, technopolymères tels que des POM chargés de fibres de verre, ou une combinaison de ceux-ci.

**7.** Moyen d'assemblage (1) selon une ou plusieurs des revendications précédentes, dans lequel lesdits éléments en verre trempé prennent la forme d'un double vitrage ou d'une feuille de verre monolithique, ou d'une combinaison de ceux-ci.

**8.** Élément de construction (2), en particulier pour un comptoir réfrigéré, comprenant des surfaces transparentes ou opaques en verre trempé assemblées par une pluralité de moyens d'assemblage (1) selon l'une ou plusieurs des revendications précédentes, dans lequel lesdits éléments en verre trempé prennent la forme d'un double vitrage ou d'une feuille de verre monolithique, ou d'une combinaison de ceux-ci.

9.  Comptoir réfrigéré (4) **caractérisé par le fait** de comporter des parois transparentes ou opaques assemblées par un ou plusieurs moyens d'assemblage selon une ou plusieurs des revendications 1 à 7.

10. Comptoir réfrigéré (4) selon la revendication 9, dans lequel lesdites parois transparentes ou opaques, après l'installation du comptoir réfrigéré, peuvent être remplacées directement sur le site d'installation et sans démontage substantiel du comptoir.

11. Comptoir réfrigéré (4) selon la revendication 9 ou 10, **caractérisé par le fait** de présenter une augmentation de la surface d'affichage totale (TDA) environ 5 % plus élevée qu'un comptoir réfrigéré similaire présentant la même surface d'affichage, mais pas le moyen d'assemblage selon une ou plusieurs des revendications 1 à 7.

12. Comptoir réfrigéré (4) selon la revendication 11, ladite augmentation de TDA permettant de :

    - gagner au moins une classe d'énergie par rapport à la classe d'un comptoir réfrigéré similaire présentant la même surface d'affichage, mais pas le moyen d'assemblage selon une ou plusieurs des revendications 1 à 7 ; ou
    - augmenter la consommation d'énergie sans dégrader la classe énergétique par rapport à un comptoir réfrigéré similaire présentant la même surface d'affichage, mais pas le moyen d'assemblage selon une ou plusieurs des revendications 1 à 7.

(91)

(90)

*(a)*

(20')    (10')    (40')

(30)    (31')

(10)    (50')

(50)

(20)    (31)

(40)    (1)

*(b)*

**Fig. 1**

(91)

(1)

(90)

*Fig. 2*

*Fig. 3(a)*

*Fig. 3(b)*

**(4)**

Fig. 4

*Fig. 5(a)*

Fig. 5(b)

**EP 4 537 711 B1**

**Patent documents cited in the description**

- EP 2666391 A2

- JP S54125861 U